# EUROPEAN PATENT APPLICATION

(11) **EP 0 783 161 A2**
(43) Date of publication of application: **09.07.1997**
(21) Application number: 97300006.0
(22) Date of filing: 02.01.1997
(51) Int. Cl.: G07B 15/02, G07F 7/00

(54) **Double registration control of entry and exit of persons or things in a predetermined zone**

(30) Priority: 02.01.1996 AR 33489296
(71) Applicant: Tecno Accion SA, Buenos Aires (AR)
(72) Inventor: Bellora, Jose, (8400) San Carlos de Bariloche (AR)
(74) Representative: Deans, Michael John Percy

(57) **Abstract**

A system is described for double registration control of entry and exit of persons or things in a predetermined zone, for example for a pay-to-park system for parking lots.

A plurality of user tokens are provided, each token being for association with an individual person or thing and having electronic autonomous data storage means including at least: a register for recording a code identifying the associated person or thing and a register for storing a credit or balance value related to available time within the zone for the associated person or thing.

At least one data recordal means, for example a parking meter, is provided. The data recordal means has a clock for keeping real time of the day.

A reader/recorder of the data recordal means reads the identification code and the credit or balance value from a token presented to the data recordal means. From the token credit or balance value read by the reader/recorder means and the real time from the clock, a variable indicative of a time limit for the associated person or thing is determined.

A data base of the data recordal means has a first field for recording identification codes read by the reader/recorder and a second field for recording the associated determined variable. A tarifier computes a charge on the basis of metered time intervals determined by real exit times outputted by the clock and the determined variables.

The first data base field is searched for a record representing the identification code read from a token and, in response to finding such a record, the charge is deducted from the credit or balance value stored in the data storage means of the corresponding token to calculate a new value. The reader/recorder stores this new value in the token.

## Description

The present invention relates to double registration control of entry and exit of persons or things in a predetermined zone, and is particularly adapted for motor-car traffic control. We describe below an electronic system applicable, for example, to parking motor-cars in public places, and to other applications such as passage and access control for motorway tolls, for example. The described system can control parking-lot arrival, exit and collection for either closed garages or open-air parking lots on streets arranged for pay parking.

The ensuing description generally refers to the latter, that is to controlling metered parking alongside pavements on streets and avenues in towns and cities, but it is to be understood that it is not limited just to this utility.

Pay-to-park parking lots are currently in use and essentially comprise a device, be it a printed chit or a mechanical clock meter, associated with each motor-car parked to enable an officer to see, by simple visual inspection, at least the time limit or remaining during which the motor-car may stay parked to determine whether it has overstayed its allotted time at a given moment. Such system requires that the driver buy virgin chits or plastic or metal tokens for mechanical meters at an authorized dealer or agency. In one case, the driver perforates or marks the chit as soon as he has parked, which times in a fixed time-interval for parking, usually two hours long, independently of the actual time he or she plans to stay and which may be significantly shorter. In the other case, each token also corresponds to a fixed time-interval, one-half- or one-hour long for example, and the driver inserts a number of tokens in the meter according to the time-interval he believes beforehand he will be parked.

These systems have a number of drawbacks and problems it is desirable to resolve. One such drawback is the lack of flexibility in relation to the parking time-interval. One system imposes a fixed time unit, independently of real user needs, which vary in each case. Although in some zones, such as in commercial downtown districts, it is desirable to impose a maximum time limit during which the motor-car may stay put without moving out of the parking lot, in order to promote a so-called motor-car rotation, for this very same reason (motor-car rotation) it does not make sense not to encourage parking for significantly shorter time intervals.

In fact, the token system deters flash parking or otherwise encourages users desirous to park for a few minutes to drive around and search for a vacated meter with some minutes still left on it. This last recourse does not engross the municipal or parking concession collection. This system further requires prior installation work for putting the parking meters in next to the parking-lots which, aside from representing a non-unsubstantial and non-recoverable cost, contributes adversely to urban aesthetics.

Both systems refered to above require that the user previously purchase associated elements - chit-books or tokens - at an agency, which he sometimes needs to search for, and which he must repeat each time he crosses into a different jurisdiction or whenever his stock is exhausted.

The chit-book system is also prone to fraud, difficult for officers or inspectors to detect and generally detectable only after audits and lengthy investigations. Fraud in the token system is also possible and, although it may be detected much sooner, requires extensive investigations to identify the origins thereof.

Another drawback is that the inspecting officers have to stop at each motor-car and take some time to take a corresponding reading of the chit or the meter to check that the parking has been paid for and that the parking time-has not been exceeded, or otherwise make out the fine ticket or have the car hauled away accordingly.

In accordance with a first aspect of this invention, we provide a system for double registration control of entry and exit of persons or things in a predetermined zone, characterized by comprising: a plurality of user tokens, each token for association with an individual person or thing and having electronic autonomous data storage means including at least: register means for recording a code identifying said associated person or thing and register means for storing a credit or balance value related to available time within said zone for said associated person or thing; and at least one data recordal means including: clock means for keeping real time of the day, reader/recorder means for reading the identification code and the credit or balance value from a token presented to the data recordal means, means for receiving said token credit or balance value read by said reader/recorder means and the real time from said clock means for determining a variable indicative of a time limit for the associated person or thing, data base means having first field means for recording said identification codes read by said reader/recorder means and second field means for recording said variable associated with each identification code recorded in said first field means, a tarifier for computing a charge on the basis of metered time intervals determined by real exit times outputted by said clock means and said variable in said second data base field, and means for searching said first data base field for a record representing the identification code read from a token and, in response to finding a record thereof, for deducting said charge from the credit or balance value stored in said data storage means of the corresponding token to calculate a new value and enabling said reader/recorder means to store said new value in said token.

According to a second and alternative aspect of this invention, we provide a method for registering and controlling a pay-to-park system including at least one parking meter terminal associated with a plurality of parking lots and a plurality of tokens associated with respective motor-cars, each token comprising means for storing an identification of the associated motor-car and a credit balance value indicative of allowable parking time, said method being characterized by comprising the steps of: (a) determining in a corresponding parking-meter terminal if the credit balance stored in each presented user token is not enough and rejecting recording the token if so, preferably by determining if the credit balance is less than a predetermined positive, nil or negative amount, (b) recording in said corresponding parking-meter terminal the motor-car identification code stored in said user token, the credit balance and real arrival time, (c) upon each corresponding parking exit computing the parking stay time-interval and the charge due according to a current tariff and deduct said charge from said credit balance, (d) travelling around said zone, preferably by a route which is changed regularly, randomly or daily, and regularly monitoring the identifications of motor-cars parked in the parking lots of the zone, (e) monitoring said corresponding parking-meter terminal to determine for each monitored parked motor-car if the identification code corresponding to said motor-car identification has an associated arrival time and/but no associated exit time, (f) determining for each identification code if the credit balance recorded is enough according to the current time and (g) generating a fine ticket in response to the identification code not being recorded in the parking-meter terminal or to the credit balance being exceeded or being below an acceptable limit.

As we shall explain below, embodiments of our system adapted for parking control allow enhanced flexibility in parking time, without recurring additional resources such as lesser value tokens or multiple tokens, but through an electronic token-type element which is both user-friendly, manageable and portable, and wherein the real parking time may be charged down to a predetermined precision such as one minute or other specified parking unit, preferably not exceeding fifteen minutes.

This encourages motor-car rotation over the metered zone as each user actually pays for the amount of minutes or time-units effectively enjoyed.

The system can be adapted for non-linear tariffs or tariffs that vary according to days of the week and time zones, as well as for progressive tariffs which reduce or increase (in the latter case to stimulate motor-car rotation) according to the time a motor-car stays parked in a same place.

The system can be adapted for a member-type user to subscribe just once, wherein consumed parking time may be prepaid through a subscription charging method or debited in a manner used in conventional services and may be incorporated into a common system such as automatic bank account debiting or easy pay agencies.

The system is less vulnerable to fraud and human error such as caused by inspector misreading of conventional parking meters.

We describe below a variant of our system that does not require that the user register in any way each time she or he leaves her or his motor-car in a metered parking lot.

Our parking systems are easy to use and free from user mistakes such as registering in a wrong parking meter. Multiple parking meter installation is not required, since, for example, a single device per square may suffice, thus producing a far lesser impact on urban scenery.

Our preferred system is a metered parking system for zones divided into a plurality of parking lots for individual motor-cars. The system comprises a plurality of user tokens or similarly functional elements able to support a stand-alone electronic data storage means, wherein an identification code for an associated motor-car is registered together with a remaining credit amount or balance, at least, and wherein a parking meter number may also be stored temporarily. Each zone has at least one parking-meter provided with a clock for computing day time, a tarifier for computing parking charges on the basis of, at least, parking time-intervals, a data base including a first field for recording motor-car identification codes and at least a second field for registering a variable related to certain parking time-limits related to credit balance, and an electronic token reader/recorder for retrieving the identification code and credit balance from a token presented by a user for parking and recording the same in said data base in association with the arrival time set by said clock and, when the user leaves the parking lot, for the tarifier to compute the parking charge according to the exit time on said clock and the arrival time recorded at parking and deduct the parking charge from the credit balance recorded on said of the corresponding token. The essential recording and control system of the invention further includes a portable inspector terminal having a means for reading a car identification, data communication means for linking with the parking-meter for transmitting car identifications and receiving corresponding time limits, and means for generating fine tickets upon the time limit associated with the car identification being exceded by the clock time or upon detecting an earlier exit time.

This system may be used in a method for operating a metered pay parking, according to which each user upon parking avails to the parking-meter corresponding to the parking lot, the parking meter checking first that the credit balance stored in the user's token is enough, rejecting to register the token otherwise. In the affirmative, the motor-car identification code and the credit balance stored in the token and the real arrival time are recorded by the parking-meter terminal. Preferably, the parking-meter terminal identification number is stored in the token in the same operation. When leaving the parking, the user presents his or her token again to the terminal for computing the parking time-interval and the charge owed for this according to the prevailing tariff and subtracting this charge from the credit balance, preferably after checking first and thereafter deleting the parking-meter terminal identification number from the token. The parking charge may be computed on the basis of differential tariffs according to the arrival and exit times, as well as from a nonlinear tariff which increases or decreases according to specifications of the parking zone if the parking time were longer than a predetermined interval. In the event that the user omits registering her or his exit, it may be presumed that she or he exhausted her or his credit and the token may not be used thereafter for parking at any other parking-meter of the system.

This method further comprises simultaneously and regularly patroling the pay-parking zone to monitor the identifications of motor-cars left in the parking lots of the zone and to communicate with the parking-meter terminal for checking that the identification code of each parked motor-car parked is associated with an arrival time and without an exit time and whether the credit balance on record is enough in terms of the actual time. In the event that no proper identification code is recorded in the parking-meter terminal or the credit balance actual is insufficient, a fine ticket is generated for the motor-car in question.

These and other features, advantages and particulars of this invention and the manner of practising the same may be better understood from the ensuing detailed description, by way of example and by no means limiting, of an exemplary embodiment represented in the appended drawings, wherein:
Figure 1 is a schematic square diagram of a metered parking system constructed according to this invention;
Figure 2 is a functional square diagram of an electronic token for the system of Figure 1;
Figure 3 is a functional square diagram of a parking-meter for the system of Figure 1;
Figure 4 is a functional square diagram of an inspector terminal for the system of Figure 1;
Figure 5 is a general flow chart of the operation of the system of Figure 1;
Figure 6 is a schematic of the electronic circuit of the parking meter of Figure 3;
Figure 7 is a schematic of a decoder circuit for the electronic terminal of Figure 6; and
Figure 8 is a schematic of the keyboard interface for the electronic terminal of Figure 6.

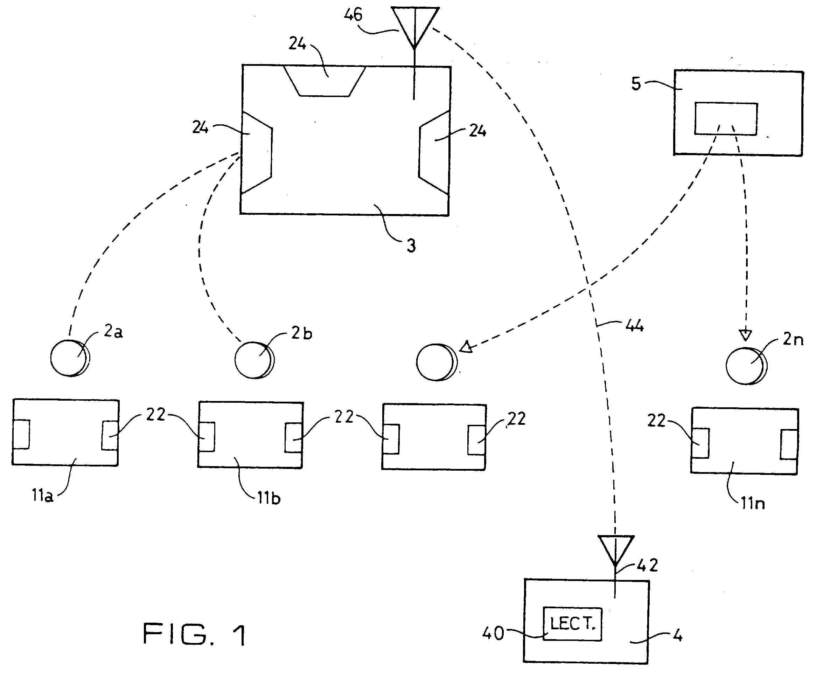

Figure 1 illustrates a general arrangement 1 of different elements of a pay-to-park system which uses a double registration method, that is registration on arrival and then on leaving the parking, and which is constructed according to the present invention. The registration means comprise electronic tokens 2a, 2b ... 2n each associated with a respective motor-car 12a, 121b ... 12n.

Each metered parking region - of which there may be many, not mattering whether they adjoin or are geographically distant from one another - is divided into zones generally equivalent to one square each. The diagram of figure 1 depicts a square or pay-parking zone preferably, but not exclusively, having just one data recordal means in the form of an electronic parking-meter terminal 3 installed on the pavement, located for easy access by users parking their cars 12 (alphabetical suffices "a", "b" ... "n" are omitted from reference numerals when generalizing) on the square corresponding to the terminal. The parking registration and control arrangement 1 is completed by a cart 14 driven by a municipal officer carrying an inspector terminal 4. Preferably, the vehicle 14 is an electric or gas-propelled cart of the type which may be found, for instance, on some golf courses, which enables the officer to patrol the area at a slow but adequate speed without obstructing the traffic. The officer with her or his corresponding terminal 4 will generally have a plurality of squares preassigned for patrolling, although plural inspectors may be used to patrol the same square at alternating intervals, each manning a corresponding terminal 4.

The electronic tokens 2 may be purchased at sale points 9 set up in a kiosk or shop on the square, as described further on herein. The tokens 2 are the means by which car-drivers subscribe to the system and are able to park their car in any approved parking lot inside the zone. The driver receives her or his corresponding token 2 upon subscribing, paying out a sum of money which may include a membership fee and a given amount of parking minutes.

Although express reference is made herein to tokens 2 of the type which may be contactless but otherwise functionally couple to the reader/recorder elements *per se*,
it is understood that other means just as satisfactory for the function to be carried out may be used, such as electronic or so-called "chip" cards, that is thin plastics cards housing an embedded integrated circuit memory.

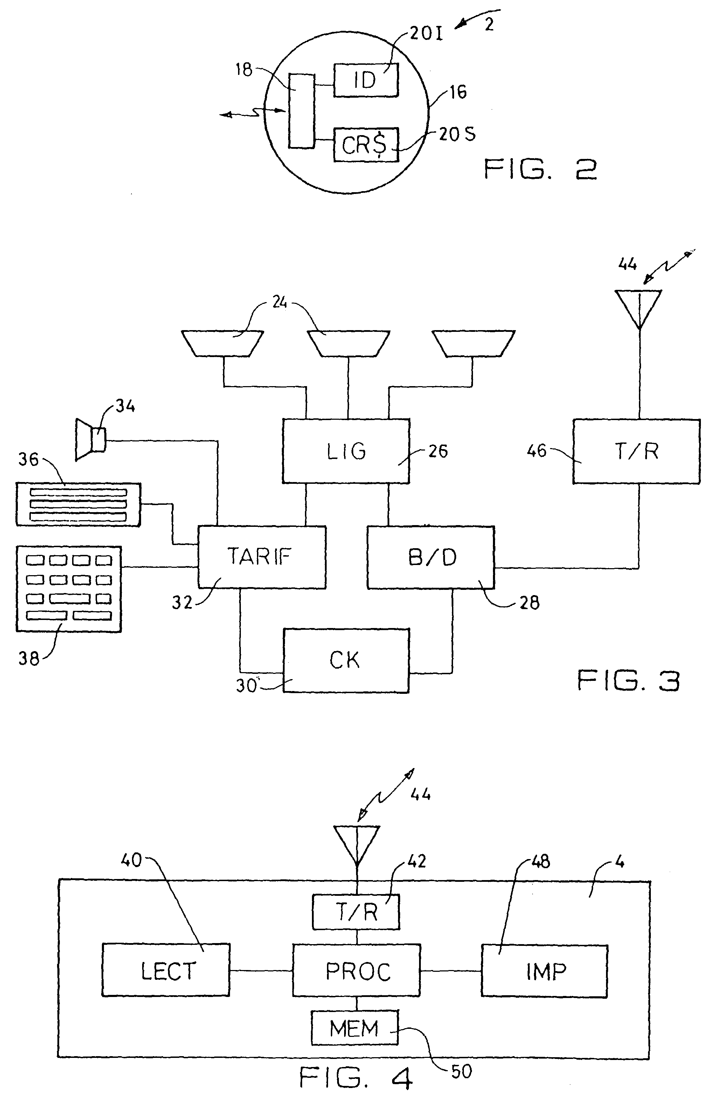

Referring to the schematic of figure 2, the token 2 comprises a relatively small cylindrical chip 16 easy to carry in ones pocket or purse. Advantageously, the chip 16 has a circular base about the size of a coin but a bit thicker. To ease portability, the dispensing terminal may sell tokens 2 in key chains for the car keys, reducing the chances of forgetting the token when taking the car 12 out for a drive.

The chip 16 integrates an electronic circuit which may be accessed from the outside by a data exchange means 18 for reading and rerecording data from a permanent memory chip housed inside the body of the chip 16, the token memory including an identification code (ID) register 20I and an available credit or balance (CR$) register 20S, at least. Both registers 20 are respectively loaded at subscription time with the motor-car identification 12 and the initial balance. The motor-car identification (ID) is a code correlating to the license number plates of the motor-car 12 or any some other motor-car code legible from the outside, such as a bar-coded stamp stuck un the windshield. Once used or exhausted, the token may be reloaded by the dispenser terminal for fully or partially repleneshing the credit (CR$) in the register 20S, under subscriber payment corresponding to the reloaded credit.

The user may use the token 2 for parking his or her car 12 a number of times in different parking lots belonging to the metered system, as long as he or she keeps enough balance (CR$) or has sufficient credit for operating otherwise, as explained hereinafter. Upon driving into and parking her or his motor-car in one of the places marked out on the square, the driver deposits her or his token 2 in a holder 24 on the parking-meter 3 of figure 3. The holder is associated with a reader/recorder (L/G) device 26 which reads data out of the registers 20 and stores then in a data-base memory (B/D) 28 of the parking-meter, together with the time of arrival transmitted by a clock (CK) 30. When the user later leaves the parking, she or he again passes her or his token 2 through one of the holders 24 of the parking-meter, which registers the exit time present on the clock 30 and the arrival and exit time data are sent to a tarifier device (TARIF) 32 for computing the parking charge, preferably down to one minute. The tarifier 32 sends this charge to the reader/recorder 26 which first checks that the contents in the register 20I coincide with the identification previously recorded in the data base 28, subtracts the charge from the former credit and stores the new balance in the register 20S of the token 2.

As may be seen in the schematic of figure 3, each parking-meter 3 is provided with one or more holders 24. In the latter plural case, each holder 24 may have its own reader/recorder 26 or else a single reader/recorder 26 may be shared by more than one holder 24 through a multiplexor circuit, as is known in the art. Each holder 24 is further protected against rain, humidity and other outdoor conditions and is connected to an active protector circuit comprising a gas discharger for supressing overvoltage peaks, a thermistor voltage divider for supressing medium power continuous voltage levels and a circuit parallel to the gas discharger and to the thermistor voltage divider for supressing and redirecting discharges according to the polarity applied.

The disclosed embodiment involves a basic operating method which, of course, has room for a number of options and add-ons. An important feature is that, upon a token 2 being presented at the parking-meter 3 by a user for parking, the tarifier 32 may compute the balance available in the register 20S and determine whether it is enough. The parking-meter 3 may reject the token 2 if not, consequently not recording the arrival time in the data base 28 and transmitting an alarm to the token user, preferably by sounding a buzzer 34 off.

The parking-meter 3 further includes a liquid-chrystal display 36 and a telephone-type keyboard 38 for the users to be able to consult their token balances anytime. The keyboard 38 comprises a metal housing with twelve buttons on it and the display 36 is of the back-lighted, LCD type offering excellent visibility, arranged with two lines of sixteen alphanumeric characters each. As disclosed further on, the first line is reserved in most cases for showing the real day time while the second line displays a message via horizontally-shifted characters. The keyboard 38 enables the user to consult her or his token 2, for example to check the available balance CR$ or which motor-car is registered with the token 2, the response coming through the display 36 or printed out by means of a small printer 39 housed in the body of the parking-meter.

A further possible addition to the parking-meter is a means to inform the subscriber via the display 36 of the maximum time-interval a token 2 has available for parking. This option is extremely useful when the tarifier 32 incorporates differential and/or nonlinear tariffs for that pay-parking zone, as apparent hereinafter, to avoid the user having to compute it on his own and possibly make a mistake in good faith. The tarifier 32 may also allow parking in the red when the balance in the register 20S is insufficient, in which case the display 36 indicates the maximum time-interval tolerated in the red, during which the user may be called upon to go to the sale point 9 to replenish her or his credit.

The basic parking register and control system is completed by the inspector terminal 4 which is mobile, in contrast to the parking-meter terminal 3. A schematic of this terminal 4 is shown in figure 4. This terminal 4 is carried by an officer travelling around in a cart 14 (figure 1), following the row of parking lots randomly occupied by cars 12. This terminal 4 has a reader (LECT) 40, preferably of the optical type, able to monitor the identifications belonging to parked motor-cars 12 one-by-one. More particularly, the reader 40 may detect a bar code 22 representing a unique car identification of the motor-car, meaning that it has a corresponding relationship with the code (ID) recorded in the register 20I of the corresponding token 2. A sticker 22 with the bar code may be affixed to a suitable surface of the car visible from the outside, for example on the windshield, although the bar code itself may be visible or not at first sight, in the latter case covered by a dark tape which is opaque to the eye but transparent to a scanner ray beamed by the reader 40.

The inspector terminal 4 may be embodied by a personal computer having a resident programme and, moreover, a transceiver (T/R) 42 coupled via a radiofrequency link (RF) to a transceiver 46 in the terminal 3 of the parking-meter. By means of the described basic arrangement having one parking-meter 3 in each square, the power requirements for both transmitters 42 and 46 are not too high, since the maximum wireless distance would be around one-hundred metres. The transmitter/receiver 42 is preferably omnidirectional, for it to be easy to handle by the officer, while the transmitter/receiver 46 may be designed with a 180° footprint facing the street.

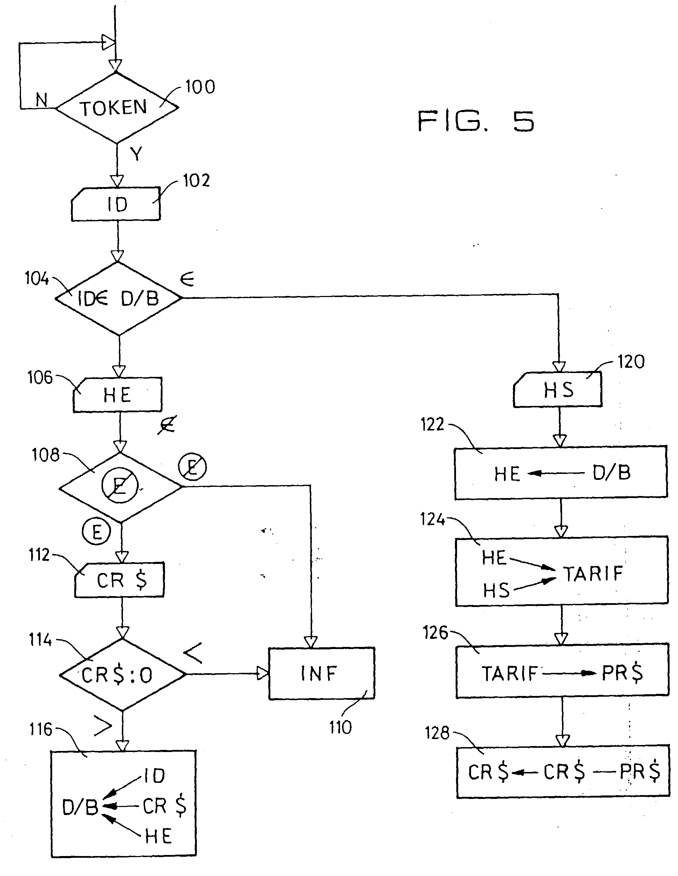

Figure 5 is a block-diagram referring to the operation of the parking-meter 3 and explaining how the register and collection part of the system 1 work. As described hereinafter, the terminal 3 preferably operates under control of a microprocessor system which normally is idle (loop 100) waiting for a token 2 to be put into the holder 24. This state is indicated on the bottom line of the display 36, while the top line shows the time, as aforesaid herein, and the real date, in the way shown:

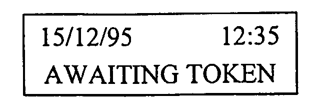

When the holder interface detects a token 2, it instructs the token register 20I to be read (step 102) and searches its data base 28 for a field containing the same code ID (step 104). If the base 28 already has a record of this code ID, this means that the user had already parked before and therefore now wishes to leave, so that the programme jumps to a routine starting on step 120; otherwise, the terminal 3 assumes that a parking entry or arrival is being registered and so it continues on to step 106 which reads the time (HE) from its internal clock 30 to check with the tarifier 32 on whether parking is allowed at this time (step 108). In the event that parking is forbidden at this time, a subroutine 110 is executed to alert the user of the impending infringement (INF), generating an alarm tone on the buzzer 34 and displaying the following message on the display 36:

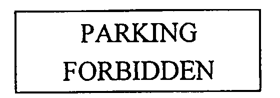

In this case, the arrival time of the token is not recorded in the data base 28 so that the user would be liable to a fine if the car is left at the parking, just as if she or he had failed to register at arrival time.

If parking is allowed, the reader/recorder 26 takes the credit or balance remaining from the register 20S of the token 2 (step 112) and the tarifier 32 determines if the balance is enough (step 114). This may entail simply comparing the balance against nought or else allow a negative balance down to a certain level until the user avails to the sale point 9 to replenish her or his credit. If there is no positive balance in the register 20S or if the negative balance is too far down for system 1 to accept it because the user has overshot her or his credit, operation branches to subroutine 110 to alert the user that her or his car 12 may not remain parked, displaying a message such as this on the screen 36:

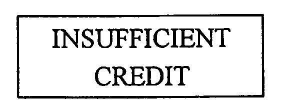

If the balance is alright, then the data base 28 accepts the parking and generates a record including the identification code of the token (equivalent to the identification of the motor-car), the available credit available and the time-of-arrival at the parking (step 116). The following message is displayed:

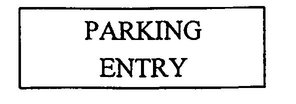

Optionally or via a user request through the keyboard 38, the display 36 could show the maximum parking time-interval or the latest day time the parking lot should be vacated, the display 36 sequencing through the following states: 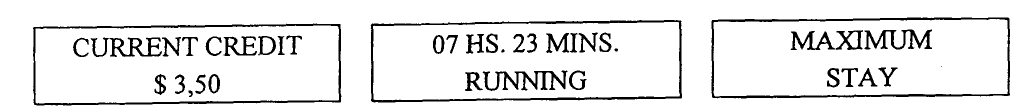 This sequencing display 36 is also generated in response to the user pressing the "0" button on the keyboard 38 and inserting the token in the holder to consult the balance.

The parking arrival registration operation finishes here. It is further foreseeable that parking be free on predetermined days or in predetermined time-zones, such as on Sundays and holidays and at night. In this case, the parking-meter 3 accepts registration anyway for statistical reasons or in case the parking time crosses over into a pay time-zone and steps 112 to 116 relative to balance processing are omitted. The user is informed thus by switching between the following messages on the display 36:

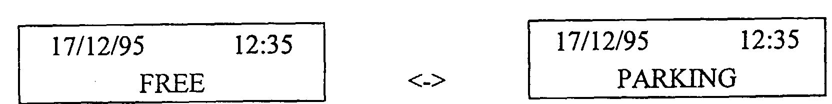

When the user returns to unpark her or his car 12, she or he inserts token 2 again in one of the holders 24 of the parking-meter 3, which need not be the same holder 24 used to register on arrival. The programme step 104 detects that the token was registered already and the display 36 issues the message:

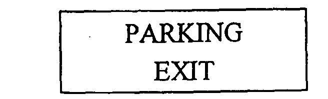

The routine then reads the exit time (HS) on the clock 30 (step 120) and the arrival time in the register corresponding to the record having the same identification code in the data base 28 (step 122). Both sets of time data are then passed on to the tarifier 124 for computing the parking charge on the basis of the overall time-interval parked, eventually as a function of tariffs in force during that interval. The tarifier 32 may comprise a table stored in memory with tariffs for different time-zones and a computer programme whch is called up as a subroutine to read this table and compute the charge in an arithmetic logic unit (not illustrated).

The tarifier 32 returns the fee (PR$) to be charged, that is to be subtracted from the token credit, abd the reader/recorder 26 stores the returned updated balance (or credit) in the token register 20S (step 128). The updated balance is also exhibited on the display 36 in the following way for the user's benefit:

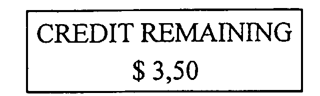

The record of the parking event is kept in the data memory 56 of the parking-meter 3, for auditing the collection of the system 1. Furthermore, the tariff prerecorded in the tarifier 32 may contain two variables: the differential variable referred to before, as a function of the day of the week and time zones, and a function for nonlinearizing the parked time-interval which may increase or reduce according to whether extended parking time or else vehicle rotation is to be encouraged. In either or both cases, the tarifier may include means applying the nonlinear tariff even if the car is moved and returned within a short predetermined time for reparking, in which case the former parking record is activated and updated. The user is issued with the following information on the display 36 in step 116:

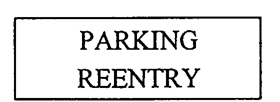

During the register operation of the step 116, it is advantageous for the reader/recorder 26 to store the identification of the parking-meter used in a register in the token and which is cleared at parking exit. In this case, the step 104 is replaced by another which simply checks that the contents of this register correspond to the parking-meter operated. This option offers the additional advantage of avoiding that the user operate the wrong parking-meter 3 and register at one not corresponding to the parking lot where the motor-car 12 is parked. This mistake would be detected by this step and the display 36 would indicate a message like: 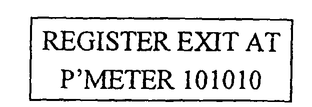 This message is supplemented by a notice on the pillar of each parking-meter 3 identifying the location of all the parking-meters 3 of the system 1.

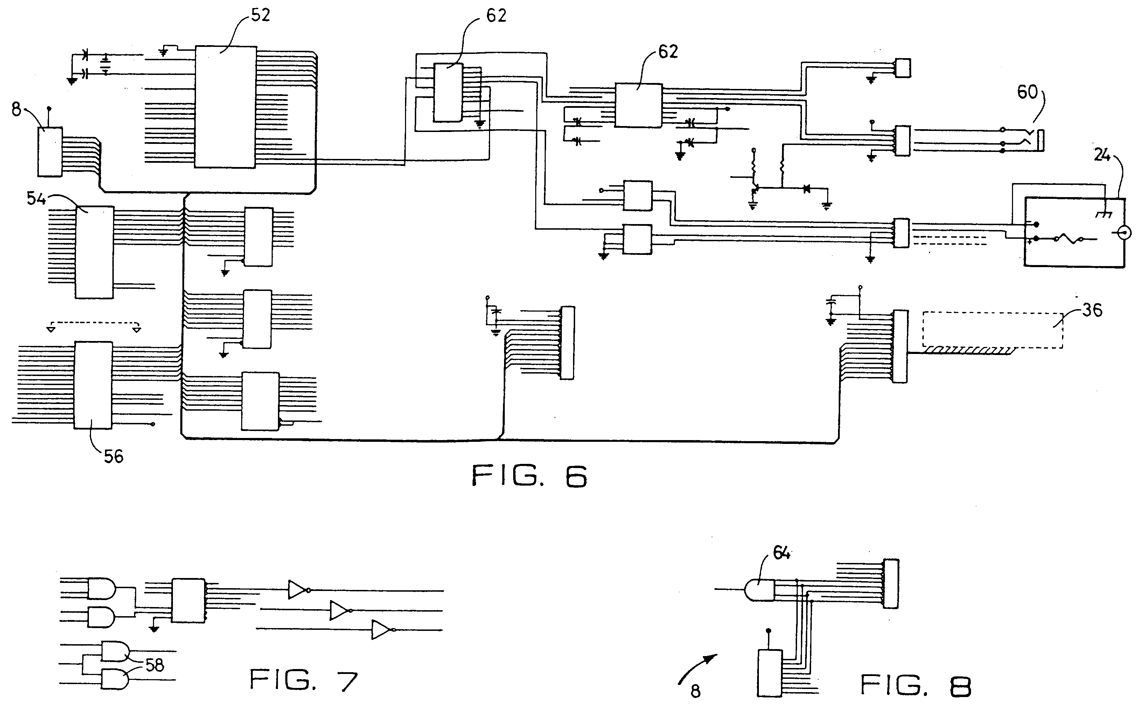

Figure 6 is a schematic of the electronic circuit for implementing the functions of the components of figure 3. The data base 28, clock 30 and tarifier 32 are grouped in an *Intel* 8031 microprocessor 52 provided with a 64-kbyte long EPROM programme memory 54 and a 32- or 128-kbyte long static random access memory 56 (SRAM) according to application specifications. This memory 56 forms part of a chip integrating the real-time clock and a battery for maintaining the nonvolatile memory autonomous for about 24 hours approximately. The most significant address lines A9-A15 are passed on to an address decoder 7 shown in figure 7 and which defines a memory map reserving positions 0000 to EFFF for the memory 56 and positions F000 to FFFF to the different inputs and outouts (I/O). Memory addressing capacity is doubled by using two output lines Q7 and Q8 from the EPROM memory 54 as RAM address selectors SEL1 and SEL2 by means of two logic AND gates 58, according to the following truth table:

| SEL1 | SEL2 | ADDRESSES |
|---|---|---|
| 0 | 0 | 00000-07FFF |
| 0 | 1 | 08000-0EFFF |
| 1 | 0 | 10000-17FFF |
| 1 | 1 | 18000-1EFFF |

The input and output positions include addresses for the interfaces for the holders 24, the reader/recorder 26, the buzzer 34, the LCD display 36, the keyboard 38, the printer 39 and the comunications ports including both the wireless port 46 and the RS232 port that uses a jack 60 in the housing of the parking-meter 3 for routine verification and retrieving statistical data. Information exchange between an inspector terminal 4, the central system, a portable switching exchange or the printer 39 are generated or processed by the same microprocessor unit 52, and pass through a serial communications unit 62 in route to the communications port comprising two RS232 and RS485 serial interfaces respectively selectable by the microprocessor 52. The interface 8 for the keyboard 38 is depicted in figure 8. When a user presses any of the buttons 38, a logic AND gate 64 generates on line 66 a transition interrupting the microprocessor 52 for it to proceed to read a pressed-button register 68 and generate a consequential response.

The microprocessor 52 under the programme stored in the memory EPROM 54 controls both the serial communications referred to above and the operation routines described in reference to figure 5. A watchdog timer is included to reboot the microprocessor in the event it gets lost in an endless loop.

Control operation of the system 1 is as follows. Assuming that all drivers of the cars 12 parked on the square under control have registered arrival per the first stage of the method of the system 1; anyone failing to do so is detected in the following control manner as well as anyone else otherwise not abiding to the parking rules such as exceeding the maximum time limit or exhausting the maximum credit available when parking a car 12. The officers' job has been substantially simplified and automated, in order to practically erradicate all sources of mistakes and increase effectiveness, in particular increasing the amount of motor-cars that may be controlled hourly.

The officer simply passes next to the parked cars 12 slowly and practically without having to stop nor get down and points the reader 40 to the identifier sticker 22 on each parked motor-car. The terminal 4 reads this datum and transmits it over the wireless link 44 to the parking-meter terminal 3. The latter searches through its data base 28 for the code corresponding to the transmitted identification and relays over the link 44 to the inspector terminal 4 information that the inspected car 12 was properly registered and has enough parking time or credit, in which case the officer procedes on to the next car 12.

Otherwise, if the situation is abnormal, either because there is no identification code in the data base 28 matching the relayed code corresponding to license plate number, meaning that the driver omitted registering arrival or else has exhausted his credit below any acceptable limit, the office makes out a fine ticket using a printer unit 48 provided on the inspector terminal 4. The officer leaves the printed ticket on the windshield of the car 12 and a record in the internal memory 50 of the terminal 4. As an option, the fine may be transmitted to a central system described hereinafter and/or or steps may be taken to restrain the motor-car with a yoke transported by the officer himself, or else call a crane to tow the car away.

The sale points 9 for dispensing or repleneshing tokens 2 comprise a microcomputer based on an *Intel* 8031 microprocessor unit, 128 kbytes of EPROM programme memory, 128 kbytes of RAM memory, a holder for newly subscribed or to-be-replenished tokens, two LCD displays, one having four rows of twenty characters each facing the sales agent and the other two rows of twenty characters each facing the user, a keyboard with sixteen alphanumeric and function buttons, a microprocessor-controlled printer with a paper roll driver and a RS232 communications interface for checking routines, all powered up off the network 220 VAC, plus a battery back-up, all integrated in a chip unit except for the holder for tokens 2 and the user display, the latter so that it may be located suitably in the shop.

The new user purchases the token from the sales point operator and passes it through the terminal 9 for registering the identification code, advantageously taken from the motor-car license-plate number, in the register 20I and an initial balance, which the user pays for together with an admission fee, is stored in the register 20S. The thus purchased token 2 is ready for use in a terminal of a parking-meter 3 of the system 1. When the balance becomes exhausted, the user simply passes by any terminal 9 of the system 1 and pays for new credit, passing the token 2 again through the terminal holder to install a new balance in the register 20S.

The terminal 9 closes the collection circuit of the system 1 by recording all subscription and repleneshing operations collected by the operator in its memory. The collection may be monitored and invoicing automated via a telephone, radio, microwave or direct communications link to a mainframe computer system. This mainframe system contains all the administrative and accounting information for the system 1 and keeps accounts of the operator agents for calculating commisions and organizing token logistics to maintain an adequate stock at all points of sale. At the end of each day, it is connected to the inspector terminals for monitoring ticketed fines and log statistics for optimizing management of the system 1. The system advantageously may prepare statistics on parking infringements detected by the parking-meters but not by officers.

The mainframe system also includes a resident programme subsystem for preparing random inspection routes on the basis of the officers on duty, granting priority to same parking zones over others and taking into account the distances to be travelled by each, with the aim of increasing effectiveness and avoiding overlap between officers at a same place. The itinerary of each officer may advantageously be downloaded at the beginning of each day to the memory of the corresponding inspector terminal 4, which includes a display 70 pointing out each officer's beat.

It is understood that although this invention has been described hereinabove in connection with pay-to or metered parking on parking premises or a concession marked out on the street, the invention is applicable to other applications for controlling and charging access and dwell time of persons or things in predetermined zones or that specify double registration control, that is entry and exit thereof. The disclosed embodiment is a mere example set forth so that anyone knowledgeable in the art may assemble and practise the invention. Variations are readily possible. For instance, the system may also accommodate single-use parking chits for those circumstantially visiting the zone and with no other reason to subscribe as well as an electronic card or other suitable element may be employed as an alternative to the token 2. The invention can be embodied as a motorway toll control and collection system in which at least one data recordal means is associated with at leat one toll control entry point and at least one data recordal means is associated with at least one toll control exit point. The token is inserted at the entry point and again at the exit point and a charge deducted, depending on time between entry and exit (which will roughly correspond to distance travelled) in the same way as described above for the parking system.

## Claims

1. A system for double registration control of entry and exit of persons or things in a predetermined zone, characterized by comprising: a plurality of user tokens, each token for association with an individual person or thing and having electronic autonomous data storage means including at least: register means for recording a code identifying said associated person or thing and register means for storing a credit or balance value related to available time within said zone for said associated person or thing; and at least one data recordal means including: clock means for keeping real time of the day, reader/recorder means for reading the identification code and the credit or balance value from a token presented to the data recordal means, means for receiving said token credit or balance value read by said reader/recorder means and the real time from said clock means for determining a variable indicative of a time limit for the associated person or thing, data base means having first field means for recording said identification codes read by said reader/recorder means and second field means for recording said variable associated with each identification code recorded in said first field means, a tarifier for computing a charge on the basis of metered time intervals determined by real exit times outputted by said clock means and said variable in said second data base field, and means for searching said first data base field for a record representing the identification code read from a token and, in response to finding a record thereof, for deducting said charge from the credit or balance value stored in said data storage means of the corresponding token to calculate a new value and enabling said reader/recorder means to store said new value in said token.

2. A system according to Claim 1, further characterized in that said token contains a contactless transceiver connected to said autonomous data storage means.

3. A system according to Claim 1 or Claim 2, further characterized in that said reader/recorder means is an optical means for logging bar-codes.

4. A system according to any preceding claim, further characterized in that said autonomous data storage means further includes a further register means for storing an identification of said data recordal means in said token transmitted by said reader/recorder means when arrival or entry to said zone is recorded in said data recordal means and clearing said register means when storing said new credit or balance value in said token.

5. A system according to any preceding claim, further characterized in that at least some of said user tokens form part' of a respective keychain.

6. A system according to any of Claims 1 to 11, further characterized in that said token comprises a card containing a chip with electronic memory for coupling to said reader/recorder.

7. A system according to any preceding claim, further characterized in that said data recordal means includes holder means for receiving a token preferably comprising a plurality of holders for simultaneous token access, and said reader/recorder means is mounted in said holder means.

8. A system according to any preceding claim, further characterized in that said tarifier means includes a table of tariffs.

9. A system according to Claim 8, further characterized in that said tariff table comprises different tariffs discriminated by time, day or date, preferably including free days and forbidden days of the week and real-time zones, and optionally including a non-linear tariff parametered by time limits.

10. A system according to any preceding claim, further characterized in that said clock, tarifier and data base means comprise a microprocessor with a programme memory and a random access memory.

11. A system according to Claim 10, further characterized in that said microprocessor is connected to an input/output port, preferably comprising two RS232 and RS485 serial interfaces series selectable by said microprocessor, for carrying out verifier routines and logging statistical data.

12. A system according to any preceding claim, further characterized in that said data recordal means is provided with a keyboard accessible externally for optional operations including consulting a credit or balance value stored in a token presented to the corresponding reader/recorder.

13. A system according to any preceding claim, further characterized by a back-up battery housed inside the corresponding data recordal means, and having an approximately 24-hour autonomy for powering said clock, reader/recorder, tarifier and database.

14. A system according to any preceding claim, characterized by further including at least one portable inspector terminal including: reader means for reading an identification of a person or thing within said zone, a data communications link for connecting said inspector terminal to said data recordal means for transmitting an identification thereto and receiving a corresponding time limit (if any) therefrom, and a means for generating an indication of a fine, preferably comprising a printer for printing a fine ticket, in response to detecting that either no entry or arrival time has been registered corresponding to the said identification or that a time limit is exceeded corresponding to the said identification or that an exit time has already been registered corresponding to the said identification.

15. A system according to Claim 14, further characterized in that said inspector terminal is hand-held.

16. A system according to Claim 14, further characterized in that said inspector terminal is transported by a slow-travelling vehicle, preferably a gas or electric motor propelled cart.

17. A system according to any of Claims 14, 15 or 16, further characterized in that said data communications link comprises a first radiofrequency transceiver housed in said data recordal means, said first radiofrequency transceiver preferably being omnidirectional and said second radiofrequency transceiver preferably having an approximately 180° radiation footprint.

18. A pay-to-park system for parking lots, comprising a system according to any preceding claim, further characterized in that said thing is a motor vehicle, and said data recordal means comprises a parking meter means, and entry and exit in said predetermined zone comprise arrival at and departure from a parking place associated with said parking meter.

19. A motorway toll control and collection system, comprising a system according to any preceding claim, further characterized in that at least one data recordal means is associated with at least one toll control entry point and at least one data recordal means is associated with at least one toll control exit point, said predetermined zone comprising motorway between said at least one entry point and said at least one exit point.

20. A token for a system as defined in any preceding claim.

21. A data recordal means, preferably a parking-meter, for a system as defined in any of Claims 1 to 19.

22. A portable inspector terminal for a system as defined in any of Claims 14 to 19.

23. A method for registering and controlling a pay-to-park system including at least one parking meter terminal associated with a plurality of parking lots and a plurality of tokens associated with respective motor-cars, each token comprising means for storing an identification of the associated motor-car and a credit balance value indicative of allowable parking time, said method being characterized by comprising the steps of: (a) determining in a corresponding parking-meter terminal if the credit balance stored in each presented user token is not enough and rejecting recording the token if so, preferably by determining if the credit balance is less than a predetermined positive, nil or negative amount, (b) recording in said corresponding parking-meter terminal the motor-car identification code stored in said user token, the credit balance and real arrival time, (c) upon each corresponding parking exit computing the parking stay time-interval and the charge due according to a current tariff and deduct said charge from said credit balance, (d) travelling around said zone, preferably by a route which is changed regularly, randomly or daily, and regularly monitoring the identifications of motor-cars parked in the parking lots of the zone, (e) monitoring said corresponding parking-meter terminal to determine for each monitored parked motor-car if the identification code corresponding to said motor-car identification has an associated arrival time and/but no associated exit time, (f) determining for each identification code if the credit balance recorded is enough according to the current time and (g) generating a fine ticket in response to the identification code not being recorded in the parking-meter terminal or to the credit balance being exceeded or being below an acceptable limit.
